# EUROPEAN PATENT APPLICATION

(11) **EP 4 530 689 A1**
(43) Date of publication of application: **02.04.2025**
(21) Application number: 24173838.4
(22) Date of filing: 02.05.2024
(51) Int. Cl.: G02B 6/38

(54) **DUST PROOFING ADAPTER WITH SHUTTER FOR OPTICAL CONNECTORS**

(30) Priority: 28.09.2023 JP 2023168625
(71) Applicant: SANWA Technologies Co., Ltd., Tokyo 165-0034 (JP)
(72) Inventor: HARA, Shota, Nakano-ku, Tokyo, 165-0034 (JP)
(74) Representative: TBK

(57) **Abstract**

A dust proofing adapter with shutter for optical connectors includes a rectangular adapter housing which is formed by an upper wall, a bottom wall and right and left side walls in such a manner as to communicate in a front-back direction. A lower guide aligning and retaining a plurality of shutters is provided in a protruding manner on a bottom wall in a front-end opening portion of the adapter housing. An upper guide is provided in a protruding manner on a lower surface of an upper wall in the front-end opening portion of the adapter housing for forming the same number of ports as that of the plurality of optical connectors, the ports fitting upper portions of the optical connectors. Shutters for the front-end opening portion of the adapter housing are arranged in parallel in close contact with each other. Compact and high-dense construction can be achieved.

## Description

### TECHNICAL FIELD

The present invention relates to a dust proofing adapter with shutter for optical connectors, and more particularly to a dust proofing adapter with shutter for optical connectors which is preferably used for interconnecting a multicore type MMC optical connector employing a more compact 1 × 16 core ferrule (TMT) than a conventional product and a duplex (two-core) type MDC optical connector employing a ferrule having 1.25 mm diameter from both end opening portions of an adapter.

### BACKGROUND ART

Conventionally, each of the dust proofing adapters with shutter for the MMC optical connector and the MDC optical connector mentioned above has been required a higher densely optical cable installing solution which can not be achieved by the dust proofing adapter with shutter employed in the existing MPO, SC or LC optical connector.

Accordingly, in the MMC optical connector and the MDC optical connector mentioned above, in order to form the dust proofing adapter with shutter employe in these connectors in small size and low density, partition walls are omitted, the partition walls being required for fitting and retaining a plurality of very small form factor (VSFF) optical connectors with good alignment in each of ports which are adjacently provided in a leading end opening portions of the dust proofing adapter with shutter.

In the meantime, optical adapters shown by patent literatures 1 and 2 have been known as an optical adapter fitting and retaining optical connectors for each of a plurality of ports which are adjacently arranged in the leading end opening portion of the dust proofing adapter via the partition wall as mentioned above.

However, in the conventional partition walls of the dust proofing adapters shown in the patent literatures 1 and 2 mentioned above, the partition wall is solidly produced by one thick plate member with no gap for each of the ports fitting a plurality of optical connectors but has a problem that the adapter is entirely enlarged at that degree, and a weight and a material cost thereof are increased.

### CITATION LIST

### PATENT LITERATURE

Patent Literature 1: Japanese Patent No. 6400892
Patent Literature 2: Japanese Patent No. 5710481

### SUMMARY OF INVENTION

### TECHNICAL PROBLEM

Accordingly, the present invention is made by taking into consideration the conventionally existing defect as mentioned above, and an object of the present invention is to provide a dust proofing adapter with shutter for optical connectors which can achieve a compact and high dense construction and small weight and save a material cost by omitting one thick plate member when forming each of ports fitting a plurality of optical connectors.

### SOLUTION TO PROBLEM

In order to solve the problem mentioned above, according to the present invention, there is provided a dust proofing adapter with shutter for optical connectors comprising a rectangular adapter housing which is formed by an upper wall, a bottom wall and right and left side walls in such a manner as to communicate in a front-back direction,
wherein a lower guide aligning and retaining a plurality of shutters is provided in a protruding manner on a bottom wall in a front-end opening portion of the adapter housing,
wherein an upper guide is provided in a protruding manner on a lower surface of an upper wall in the front-end opening portion of the adapter housing for forming the same number of ports as that of the plurality of optical connectors, the ports fitting upper portions of the optical connectors, and
wherein the same number of shutters closing the ports are arranged in parallel in close contact with each other so that upper portions are inclined rearward, for each of the ports in the front end opening portion of the adapter housing, the shutter is retained to be normally energized in a closing direction by a spring which is arranged in a lower end of each of the shutters, and an upper end of each of the shutters is locked to a rear end of an upper guide which is provided in a protruding manner on a lower surface of the upper wall of the adapter housing.

In the adapter housing, arc-shaped protruding portions are formed in leading ends of right and left side walls so as to serve as an insertion guide by coming into slidable contact with outer surfaces of right and left side portions of the optical connectors fitting to inner portions of the ports positioned at both right and left ends.

The lower guide is formed by disposing a plurality of guide projections in a protruding manner in a front-back direction at intervals on an upper surface in a bottom wall of the adapter housing so as to normally align and retain the plurality of shutters side by side, the guide projection having a square bar shape.

The upper guide is formed by disposing a plurality of guide plates in a protruding manner at the same intervals as a lateral width of an upper portion of the optical connector fitted to each of the ports in a lower side of a locking plate attached to a lower surface of an upper wall of the adapter housing.

A pair of two locking holes for attaching and detaching the upper guide are opened to both right and left sides in front of an upper wall of the adapter housing.

A locking pawl is formed below one side of right and left inner walls of each of a pair of two locking holes opened to the upper wall of the adapter housing.

The locking plate of the upper guide is formed into a rectangular shape in a plan view, a pair of two guide plates are perpendicularly fixed to lower sides of both ends thereof, and upper ends of the two guide plates are fixed to inner sides of both the guide plates so as to form totally three intervals having the same size as the lateral width of the upper portion of the optical connector on the lower surface of the locking plate.

In the locking plate of the upper guide, a long hole is opened along a longitudinal direction approximately at the center portion thereof, the locking pawls disposed in upper ends of two guide plates are inward inserted and fixed above an inner side of the long hole at the same intervals as the size of the lateral width of the upper portion of the optical connector, and the locking pawls are engaged with locking pawls disposed below the locking hole opened to the upper wall of the adapter housing, thereby forming the two guide plates in such a manner as to removably fix to a lower side of the locking plate.

The locking plate of the upper guide forms in a rear end edge thereof locking concave portions to which upper portions of outer plates disposed in both sides of the shutter in a front side are fitted in a diagonally inclined manner to be retained.

The shutter is provided slightly below a center portion thereof with a concave portion having an approximately U-shaped form in a side view, so as to prevent an optical ferrule protruding to each of the optical connector leading ends from being in contact, when the optical connector is erroneously fitted to each of the ports of the adapter housing from the above or below diagonally, and is provided with a shutter plate which integrally includes side plates for closing both right and left sides of the concave portion, the outer plates are integrally connected to both sides of the upper portions of the side plates in the shutter plate, and each of a pair of notch grooves is formed between an outer surface of the shutter plate and a rear end of the outer plate, the notch grooves detachably fitting to the lower guide of the adapter housing at a time point when the shutter is finally opened.

The shutter forms arcuate notches in upper ends of the outer plates connected to both sides of the concave portion of the shutter plate, so as to prevent the optical ferrule protruding to each of the optical connector leading ends from being in contact when the optical connector is erroneously fitted to each of the ports of the adapter housing in an inclined manner from a rightward direction or a leftward direction.

The shutter is formed in such a manner that an upper end of the outer plate protrudes with respect to an upper end of a side plate in the shutter plate, so that the outer plate leading ends are provided in a protruding manner in a pair vertically long state in both ends in a front face of the shutter closing the front end opening portion of the adapter housing.

The shutter is formed as a taper in which outer surfaces of a pair of outer plates disposed in both sides of the shutter plate are expanded little by little toward a rear side.

A notch groove of the shutter is formed in such a manner as to detachably fit to one surface portion above a square-bar-shaped guide projection constructing the lower guide provided in a protruding manner in a bottom wall of the adapter housing and allow a notch groove of the other shutter adjacent to the remaining one surface portion to detachably fit.

A bearing for a support shaft inserted into shaft holes in lower ends of the right and left side walls in a front-end side of the adapter housing is integrally formed in a rear side of a lower end of the shutter.

The support shaft axially supported to the bearing forms a trumpet-shaped slip-off preventing portion in both ends of a circular pipe.

An arcuate guide is provided in a protruding manner in such a manner that the shutter leading end comes into slidable contact with a rear side of an upper guide attached to an inner lower surface of an upper wall of the adapter housing when rotating in association with a closing motion or an opening motion of the shutter.

### EFFECT OF INVENTION

More specifically, the present invention includes the rectangular adapter housing which is formed by the upper wall, the bottom wall and the right and left side walls in such a manner as to communicate in the front-back direction, the lower guide aligning and retaining a plurality of shutters is provided in a protruding manner on the bottom wall in the front end opening portion of the adapter housing, the upper guide is provided in a protruding manner on the lower surface of the upper wall in the front end opening portion of the adapter housing for forming the same number of ports as that of the plurality of optical connectors, the ports fitting upper portions of the optical connectors, the same number of shutters closing the ports are arranged in parallel in close contact with each other so that the upper portions are inclined rearward, for each of the ports in the front end opening portion of the adapter housing, the shutter is retained to be normally energized in the closing direction by the spring which is arranged in the lower end of each of the shutters, and the upper end of each of the shutters is locked to the rear end of the upper guide which is provided in a protruding manner on the lower surface of the upper wall of the adapter housing. Therefore, the present invention can contribute to downsizing and weight saving of a whole of the adapter, and saving of a material cost, and can achieve an effect of effectively preventing dust from intruding into the adapter housing from the separation and connection portion of the shutter.

In the adapter housing, the arc-shaped protruding portions are formed in the leading ends of the right and left side walls so as to serve as the insertion guide by coming into slidable contact with the outer surfaces of the right and left side portions of the optical connectors fitting to the inner portions of the ports positioned at both right and left ends. Therefore, both walls of the adapter housing are long, and it is possible to accurately and smoothly fit the optical connector to each of the parts.

The lower guide is formed by disposing a plurality of guide projections in a protruding manner in the front-back direction at intervals on the upper surface in the bottom wall of the adapter housing so as to normally align and retain the plurality of shutters side by side, the guide projection having the square bar shape. Therefore, it is possible to retain the shutters at fixed positions in the adapter housing without normally disturbing the arrangement of the shutters disposed in the front-end opening portion of the adapter housing.

The upper guide is formed by disposing a plurality of guide plates in a protruding manner at the same intervals as the lateral width of the upper portion of the optical connector fitted to each of the ports in the lower side of the locking plate attached to the lower surface of the upper wall of the adapter housing. Therefore, it is possible to accurately and smoothly fit the plurality of optical connectors to the respective ports disposed in the front-end opening portions of the adapter housing.

A pair of two locking holes for attaching and detaching the upper guide are opened to both the right and left sides in front of the upper wall of the adapter housing. Therefore, it is possible to contribute to an easy attaching and detaching operation of the upper guide.

The locking pawl is formed below one side of the right and left inner walls of each of a pair of two locking holes opened to the upper wall of the adapter housing. Therefore, it is possible to contribute to an easy one-touch attaching and detaching operation of the upper guide.

The locking plate of the upper guide is formed into the rectangular shape in a plan view, a pair of two guide plates are perpendicularly fixed to the lower sides of both the ends thereof, and the upper ends of the two guide plates are fixed to the inner sides of both the guide plates so as to form totally three intervals having the same size as the lateral width of the upper portion of the optical connector on the lower surface of the locking plate. Therefore, it is possible to easily manufacture the upper guide which can accurately and smoothly fit the optical connecter, by providing the suitable number of guide plates in the inner wall of the adapter housing via the locking plate to protrude downward.

In the locking plate of the upper guide, the long hole is opened along the longitudinal direction approximately at the center portion thereof, the locking pawls disposed in the upper ends of two guide plates are inward inserted and fixed above the inner side of the long hole at the same intervals as the size of the lateral width of the upper portion of the optical connector, and the locking pawls are engaged with the locking pawls disposed below the locking hole opened to the upper wall of the adapter housing, thereby forming the two guide plates in such a manner as to removably fix to the lower side of the locking plate. Therefore, it is possible to easily attach and detach the upper guide with respect to the adapter housing through one-touch operation according to the attaching and detaching operation of the locking pawls.

The locking plate of the upper guide forms in the rear end edge thereof the locking concave portions to which the upper portions of the outer plates disposed in both the sides of the shutter in the front side are fitted in a diagonally inclined manner to be retained. Therefore, it is possible to accurately and simply position the shutter with respect to the locking plate of the upper guide when closing the shutter.

The shutter is provided slightly below the center portion thereof with the concave portion having the approximately U-shaped form in a side view, so as to prevent the optical ferrule protruding to each of the optical connector leading ends from being in contact, when the optical connector is erroneously fitted to each of the ports of the adapter housing from the above or below diagonally, and is provided with the shutter plate which integrally includes the side plate for closing both the right and left sides of the concave portion, the outer plates are integrally connected to both the sides of the upper portions of the side plates in the shutter plate, and each of a pair of notch grooves is formed between the outer surface of the shutter plate and the rear end of the outer plate, the notch grooves detachably fitting to the lower guide of the adapter housing. Therefore, the ferrule leading end of the optical connector does not come into contact with the shutter plate even by fitting the optical connector to the adapter housing from the diagonally upper and lower directions. Further, the shutters are arranged in parallel in a normally close contact state when opening and closing it and achieves such an effect that a trouble caused by the collision with the lower guide can be easily and securely prevented even when finally opening.

The shutter forms the arcuate notches in the upper ends of the outer plates connected to both the sides of the concave portion of the shutter plate, so as to prevent the optical ferrule protruding to each of the optical connector leading ends from being in contact when the optical connector is erroneously fitted to each of the ports of the adapter housing in an inclined manner from the rightward direction or the leftward direction. Therefore, it is possible to effectively prevent the optical ferrule protruding to the optical connector leading end from coming into contact with the outer plates in both the sides of the shutter plate.

The shutter is formed in such a manner that the upper end of the outer plate protrudes with respect to the upper end of the side plate in the shutter plate, so that the outer plate leading ends are provided in a protruding manner in a pair vertically long state in both the ends in the front face of the shutter closing the front-end opening portion of the adapter housing. Therefore, a plurality of shutters are arranged in such a manner that the respective outer plates provided in a protruding manner in both the ends thereof are in close contact with each other. Thus, it is possible to securely prevent the dust from intruding into the adapter housing.

The shutter is formed as the taper in which the outer surfaces of a pair of outer plates disposed in both the sides of the shutter plate are expanded little by little toward the rear side. Therefore, the adjacent shutters sufficiently have an inherent function of closing the front face opening portion of the adapter housing only by the front face leading ends thereof, and the rear expanded portion is communicated with the enlarged groove constituted by combination of the notch grooves of the shutter plates. As a result, it is possible to minimize a contact area in association with the opening and closing motion of the shutters, and it is possible to smoothly carry out the opening and closing motion of each of the shutters.

The notch groove of the shutter is formed in such a manner as to detachably fit to the one surface portion above the square-bar-shaped guide projection constructing the lower guide provided in a protruding manner in the bottom wall of the adapter housing and allow the notch groove of the other shutter adjacent to the remaining one surface portion to detachably fit. Therefore, it is possible to securely prevent the collision with the guide projection at a time point when the adjacent shutters are finally opened.

The bearing for the support shaft inserted into the shaft holes in the lower ends of the right and left side walls in the front-end side of the adapter housing is integrally formed in the rear side of the lower end of the shutter. Therefore, the shutter can be axially supported to the support shaft disposed in the bottom wall of the adapter housing in such a manner as to rotate without looseness.

The support shaft axially supported to the bearing forms the trumpet-shaped slip-off preventing portion in both the ends of the circular pipe. Therefore, the support shaft can securely prevent from separating from the shaft hole disposed below the front end of the adapter housing.

The arcuate guide is provided in a protruding manner in such a manner that the shutter leading end comes into slidable contact with the rear side of the upper guide attached to the inner lower surface of the upper wall of the adapter housing when rotating in association with the closing motion or the opening motion of the shutter. Therefore, the shutter can be normally opened and closed at the accurate position via the support shaft.

### BRIEF DESCRIPTION OF DRAWINGS

Fig. 1 is an exploded perspective view of a whole of a dust proofing adapter with shutter for an optical connector according to the present invention.
Figs. 2A to 2D show the dust proofing adapter with shutter for the optical connector, in which Fig. 2A is a front elevational view of the adapter single body, Fig. 2B is a front elevational view after being assembled, Fig. 2C is a plan view of the same, and Fig. 2D is a side elevational view of the same.
Figs. 3A and 3B show the dust proofing adapter with shutter for the optical connector when being assembled, in which Fig. 3A is an entirely perspective view as viewed from a diagonally front side, and Fig. 3B is an explanatory view in which a circle part in Fig. 3A is enlarged.
Fig. 4A is a side cross sectional view along a line A-A in Fig. 2C, and Fig. 4B is an explanatory view in which a circle part in Fig. 4A is enlarged.
Fig. 5 is a plan cross sectional view as viewed from a diagonally front side in the same manner as Fig. 3A.
Fig. 6 is an enlarged cross-sectional view along a line B-B in Fig 2C.
Fig. 7A is an enlarged front elevational view showing an internal state by deleting an upper side portion while leaving a base portion of a shutter in Fig. 2B, and Fig. 7B is a cross-sectional view in which a circle portion in Fig. 7A is further enlarged.
Figs. 8A to 8E show the shutter, in which Fig. 8A is a front elevational view, Fig. 8B is a right- side elevational view, Fig. 8C is a left side elevational view, Fig. 8D is a back elevational view, and fig. 8E is a plan view.
Figs. 9A and 9B show the shutter, in which Fig. 9A is a perspective view as viewed from a diagonally front side, and Fig. 9B is a perspective view as viewed from a diagonally rear side.
Figs. 10A to 10C show the shutter, in which Fig. 10A is a cross-sectional view along a line C-C in Fig. 8A, Fig. 10B is a cross-sectional view along a line D-D, and Fig. 10C is a cross-sectional view along a line D-D.
Figs. 11A to 11E show an upper guide of the optical connector, in which Fig. 11A is a front elevational view, Fig. 11B is a back elevational view, Fig. 11C is a plan view, Fig. 11D is a bottom elevational view, and Fig. 11E is a side elevational view.
Figs. 12A and 12B show a shutter shaft, in which Fig. 12A is a front elevational view, and Fig. 12B is a cross-sectional view along a line F-F in Fig. 12A.
Fig. 13 is a side cross sectional view of the adapter and the optical connector and shows a state just before a ferrule portion of the optical connector comes into contact with a front surface of the shutter after being inserted between leading end opening portions of the dust proofing adapter with shutter.
Figs. 14A and 14B show a state in which the optical connector is fitted and connected to the dust proofing adapter with shutter, in which Fig. 14A is an explanatory view in which a whole of the dust proofing adapter with shutter and only the ferrule of the optical connector are sectioned, and Fig. 14B is an explanatory view in which the dust proofing adapter with shutter and a whole of the optical connector are sectioned.
Fig. 15 is a perspective view showing a state in which an upper end of the shutter is fitted to a leading end concave portion of an upper guide of the optical connector as viewed from a rear side of the optical connector.
Fig. 16 is a side cross sectional view of a front face side of a front-end opening portion of the dust proofing adapter with shutter as viewed from a diagonally lower side.
Fig. 17 is a side cross sectional view of a front face side of a front-end opening portion of the dust proofing adapter with shutter as viewed from a diagonally lower side.
Fig. 18 is a side cross sectional view of a front face side of a front-end opening portion of the dust proofing adapter with shutter as viewed from a diagonally lower side.

### DESCRIPTION OF EMBODIMENT

A description will be in detail given below of an embodiment according to the present invention with reference to the accompanying drawings.

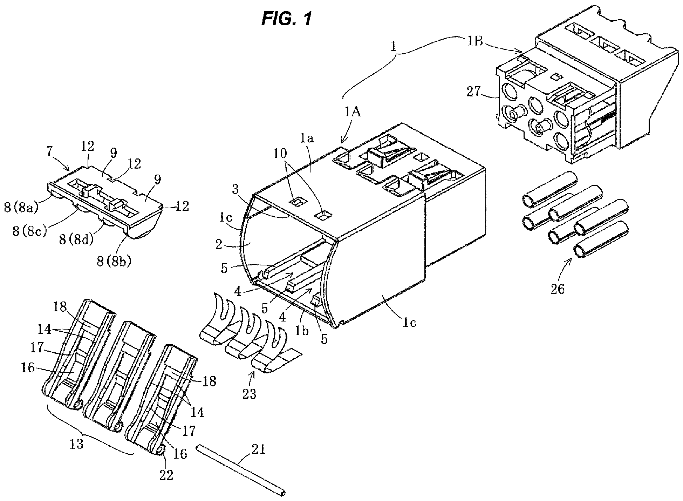

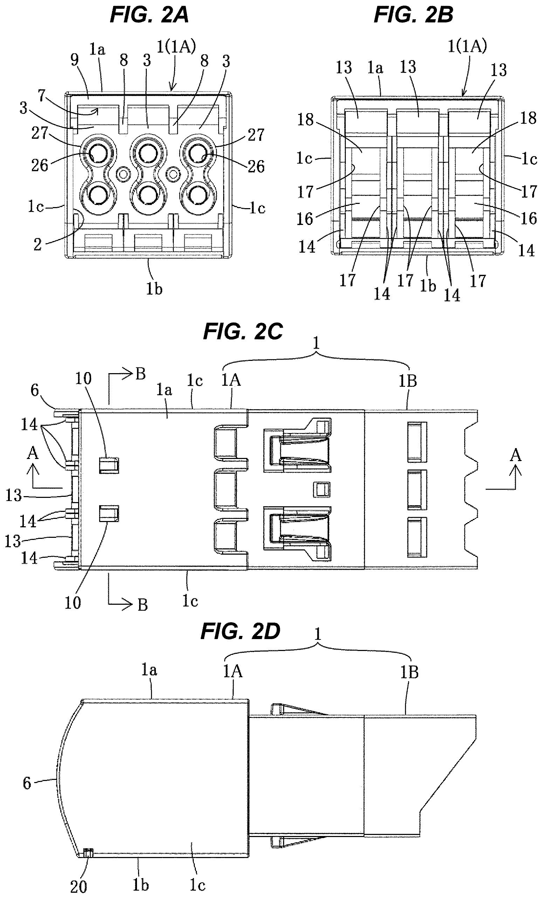

A dust proofing adapter with shutter according to the present embodiment has a rectangular adapter housing 1 which is formed by an upper wall 1a, a bottom wall 1b, and both right and left walls 1c and 1c in such a manner as to communicate forward and backward, as shown in Figs. 1 to 7.

The adapter housing 1 is separated into two members including a front housing 1A and a rear housing 1B, as is clearly shown in Fig. 1, and is constructed by connecting these housings 1A and 1B. However, the adapter housing 1 may be integrally constructed as a whole without being separated into two members.

A lower guide 4 aligning and retaining shutters 13 mentioned later is provided in a protruding manner in the bottom wall 1b of a front-end opening portion 2 in the adapter housing 1 (the front housing 1A).

In the present embodiment, an MDC optical connector is used for an optical connector M, and four square-bar-shaped guide projections 5 serving as a lower guide 4 are provided in a protruding manner at intervals in the bottom wall 1b of the connector housing (the front housing 1A) in order to align and retain a plurality of shutters 13 side by side normally (including opening and closing time).

These four guide projections 5 are formed by two narrow guide projections 5a and 5a which are provided in a protruding manner at lower ends of the right and left side walls 1c and 1c in both ends of the bottom wall 1b of the adapter housing 1 (the front housing 1A), and two wide guide projections 5b and 5b which are provided in a protruding manner at a center side of the bottom wall 1b. The wide guide projections 5b and 5b are formed with a double width of the narrow guide projections 5a and 5a. Reason thereof will be mentioned later.

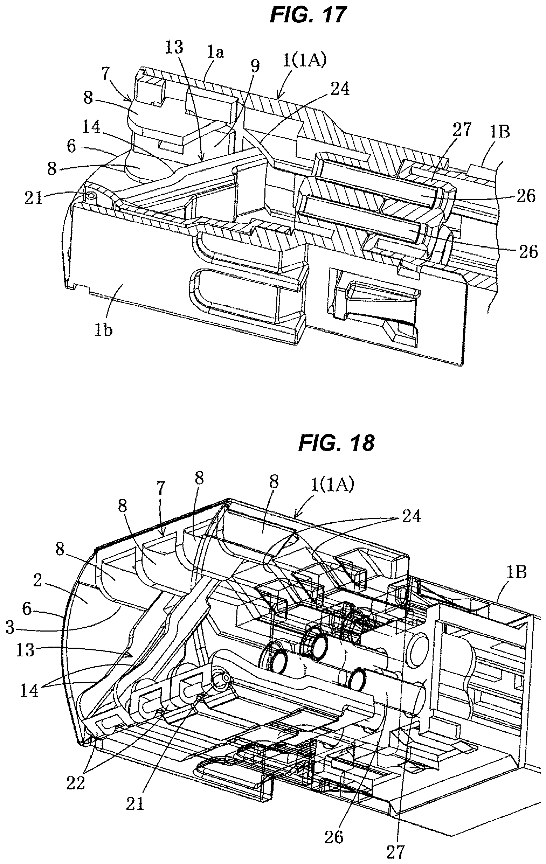

In the adapter housing 1 (the front housing 1A), arc-shaped protruding portions 6 are formed in leading ends of the right and left side walls 1c and 1c in order to serve as a guide for smoothly inserting the optical connector M when outer surfaces of right and left side portions of the optical connector M fitting to inner portions of the respective ports 3 positioned at both the right and left ends come into slidable contact, as shown in Figs. 1, 2D, 13, 16 and 18.

In the meantime, an upper guide 7 is provided in a protruding manner in the upper wall 1a of the front-end opening portion 2 in the adapter housing 1 (the front housing 1A) in order to form the same number of ports for fitting upper portions of the plurality of optical connectors M.

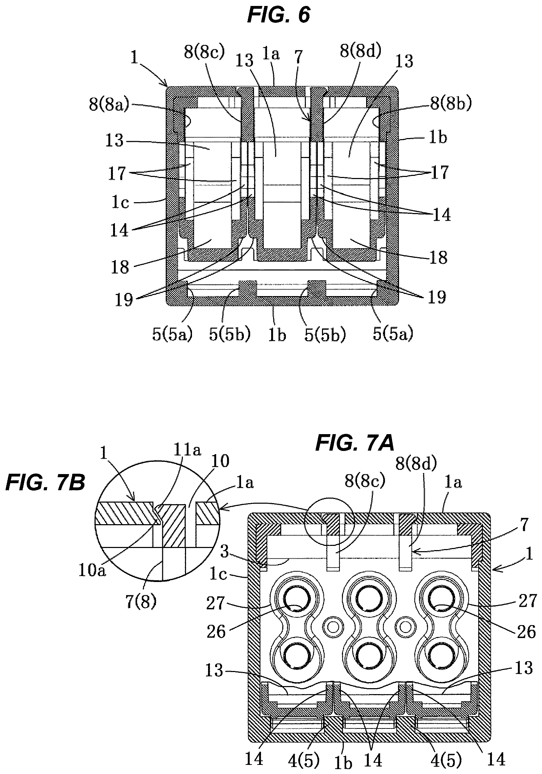

In the present embodiment, as shown in Figs. 6, 7, 11, 16, 17 and 18, four guide plates 8 are provided as the upper guide 7 in the upper wall 1a of the adapter housing 1 (the front housing 1A) in a downward protruding manner at the same intervals as an upper lateral width of three optical connectors M fitting to three ports 3.

Further, in the present embodiment, the upper guide 7 is provided with a locking plate 9 which is attached to a lower surface of the upper wall 1a of the adapter housing 1 (the front housing 1A) and has an approximately rectangular shape in a plan view, a pair of two guide plates 8a and 8b are perpendicularly fixed to lower sides of both ends of the locking plate 9, and upper portions of two guide plates 8c and 8d are fixed to inner sides of both the guide plates 8a and 8b for forming totally three intervals having the same size as the upper lateral width of the optical connector M in the lower surface of the locking plate 9.

A pair of two locking holes 10 are opened to both right and left sides in front of the upper wall 1a of the adapter housing 1 (the front housing 1A), and are formed in such a manner that the locking plate 9 of the upper guide 7 can lock and unlock to the lower surface of the adapter housing 1 (the front housing 1A) via the locking holes 10. Further, locking pawls 10a and 10a are formed in one side of the right and left inner walls within the pair of two locking holes 10 which are opened to the upper wall 1a of the adapter housing 1 (the front housing 1A).

In the locking plate 9 of the upper guide 7, a long hole 11 is opened approximately at the center portion thereof along a longitudinal direction, and locking pawls 11a and 11a disposed at upper ends of two guide plates 8c and 8d are inward inserted and fixed to the inside upper side of the long hole 11 at the same intervals as the lateral width of the upper end of the optical connector M. Further, these two guide plates 8c and 8d are detachably fixed to the lower side of the locking plate 9 by respectively engaging the locking pawls 11a and 11a to the locking pawls 10a and 10a which are disposed below a pair of locking holes 10 and 10 opened to the center side in front of the upper wall 1a of the adapter housing 1 (the front housing 1A).

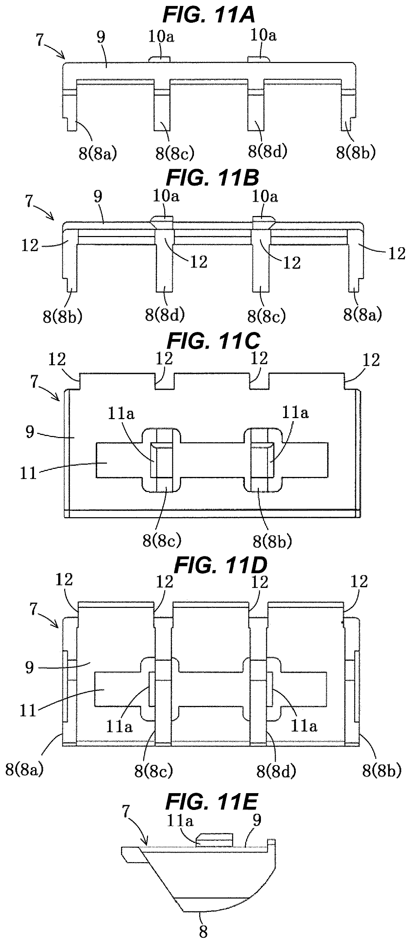

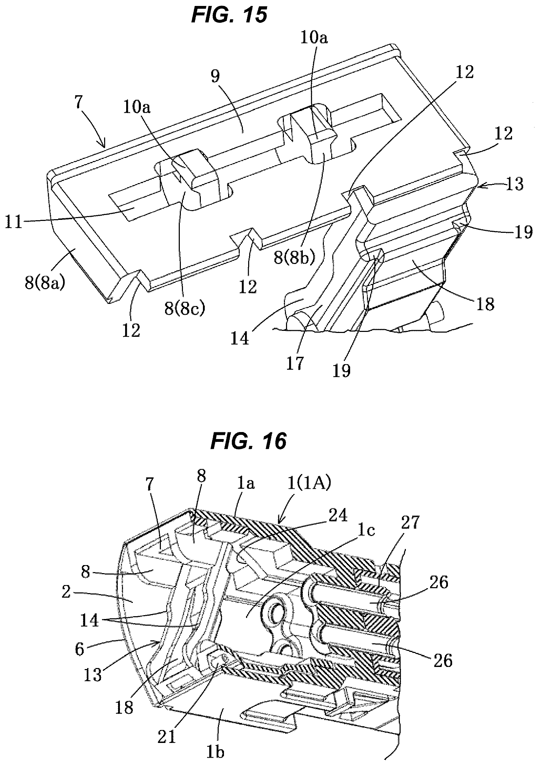

Further, in the locking plate 9 of the upper guide 7, as shown in Figs. 11 and 15, two locking concave portions 12 are formed in both ends of the locking plate 9 and two locking concave portions 12 are formed in the center side at the rear of the guide plates 8c and 8d, totally four locking concave portions 12 are formed at the rear end edge of the locking plate 9, the locking concave portion 12 biasing and retaining the upper end of the outer plates 14 disposed at both the ends of the front face of the shutter 13 in a diagonally inclined manner. The lateral width of the locking concave portion 12 has in a center side thereof such a size that two outer plates 14 of the adjacent shutters 13 fit, and also has in both ends thereof such a size that the leading end of one outer plate 14 of the shutter 13 fits.

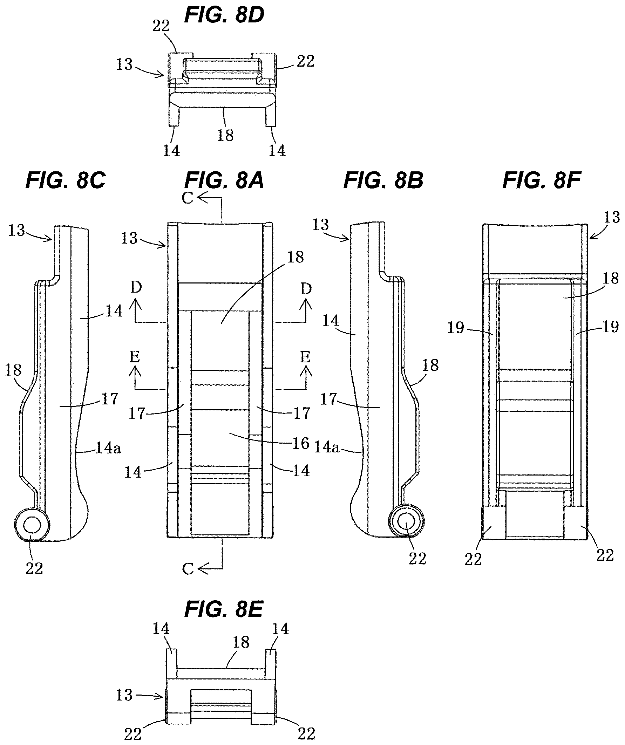

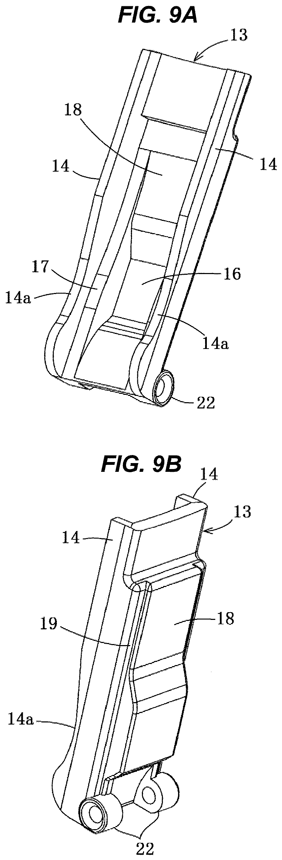

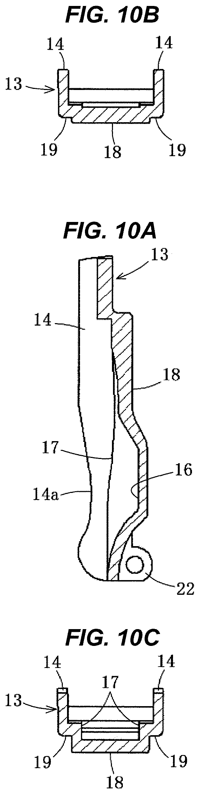

In the meantime, the shutter 13 is provided in a slightly lower side of the center portion with a concave portion 16 having an approximately U-shaped form in a side view, in order to prevent the ferrule 15 protruding to the leading end of each of the optical connectors M from coming into contact, when fitting the optical connector M to each of the ports 3 of the adapter housing 1 (the front housing 1A), and is also provided with a shutter plate 18 in which a side plate 17 is integrally formed for closing both right and left sides of the concave portion 16, as shown in Figs. 8, 9 and 10. Thus, it is possible to effectively prevent the ferrule 15 protruding to the leading end of the optical connector M from coming into contact with the shutter plate 18 even if the optical connector M is erroneously fitted in an inclined manner to each of the ports 3 of the adapter housing 1 from a diagonally upper side or lower side.

Further, the outer plates 14 are integrally connected to both sides in an upper portion of the side plate 17 in the shutter plate 18. Here, the shutter 13 is formed into a vertically long rectangular shape in a front view, and are formed in such a manner that an upper end of each outer plate 14 protrudes out of each upper end of the side plate 17 in the shutter plate 18. Thus, the outer plates 14 are provided in a protruding manner in both ends of a front face of the shutter plate 18 in a pair vertically long state.

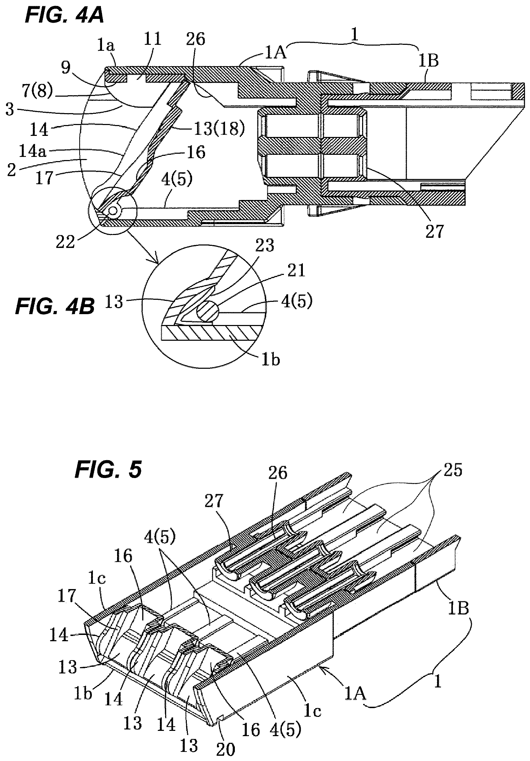

The shutter 13 is structured such that an arcuate notch 14a is formed in an upper end of each outer plate 14 connected to both sides of the concave portion 16 of the shutter plate 18 for preventing the optical ferrule 15 protruding to each of the leading ends of the optical connectors M from coming into contact when erroneously fitting the optical connector M to each of the ports 3 of the adapter housing 1 from a rightward direction or a leftward direction, as shown in Figs. 4, 5, 9 and 10. Thus, it is possible to effectively prevent the optical ferrule 15 protruding to the leading end of the optical connector M from coming into contact with the outer plates 14 in both sides of the shutter plate 18.

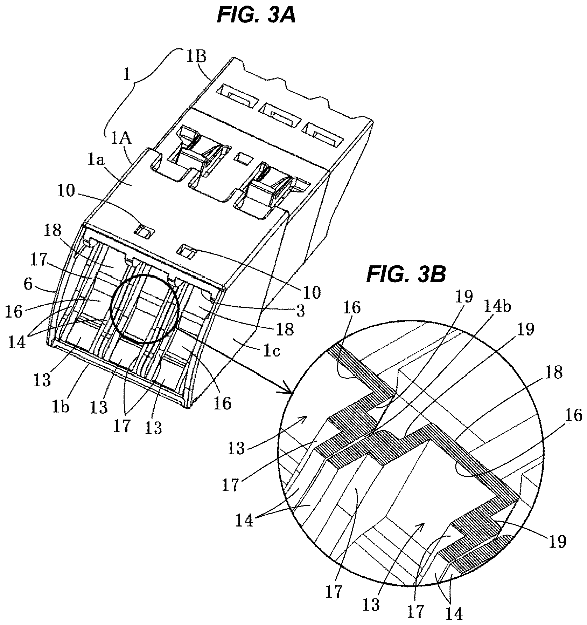

Further, the shutter 13 forms outer surfaces of a pair of outer plates 14 disposed in both sides of the shutter plate 18 as a taper 14b which is expanded little by little toward a rear side, as is clearly shown in Fig. 3B. Thus, the adjacent shutters 13 have an original function of closing the front face opening portion 2 of the adapter housing 1 only by the front face leading ends of both the outer plates 14, and the expanded portion constructed by the rearward taper 14b is communicated with an enlarged groove constructed by combination of notch grooves 19 of the adjacent shutters 13. As a result, it is possible to minimize a contact area in association with an opening and closing motion of the shutters 13. Thus, it is possible to prevent the motion of the shutter from being interfered, for example, prevent the collision of the outer plates 14 of the adjacent shutters 13.

As shown in Figs. 3, 6 and 7, the L-shaped notch groove 19 is formed between both sides of the shutter plate 18 and the rear end of the outer plate 14, the notch groove 19 detachably fitting to the lower guide 4 of the adapter housing 1 (the front housing 1A) at the final releasing time point of the shutter 13.

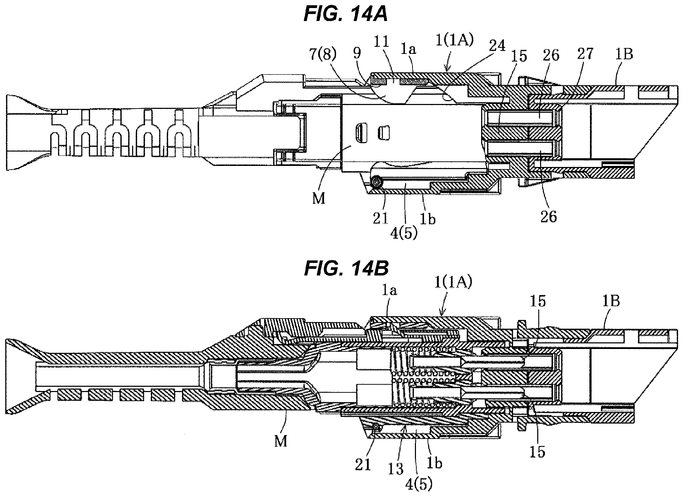

Incidentally, the notch groove 19 engages little by little with the guide projection 5 constructing the lower guide 4 according to the releasing motion of the shutter 13 under closing due to the pressing fit motion of the optical connector M, and completely engages with the guide projection 5 in the final step that the ferrule 15 in the leading end of the optical connector M is inserted and connected into a sleeve 26 of a sleeve holder 27 which is positioned at the center within the adapter housing 1 (refer to Fig. 14). At this time, the shutter 13 is brought into pressure contact with a lower wall of the optical connector M and is retained in an approximately horizontal state.

The notch groove 19 of the shutter 13 detachably fits to one face portion above the square-bar-shaped guide projection 5 constructing the lower guide 4 which is provided in a protruding manner in the bottom wall 1b of the adapter housing 1 (the front housing 1A), and is formed in such a manner that the notch groove 19 of the other shutter 13 adjacent to the remaining one face portion detachably fits.

Accordingly, as shown in Figs. 1, 2, 3 and 6, these three shutters 13 bring the leading ends of the outer plates 14 provided in a protruding manner in both ends of the front face of the shutter 13 into close contact with both the side walls 1c and 1c of the adapter housing 1 (the front housing 1A) for completely closing three ports 3 formed in the front face opening portion 2 of the adapter housing 1 (the front housing 1A), and both ends of the shutter 13 arranged at the center portion are brought into contact with the inner ends of the shutters 13 arranged adjacently in both right and left side thereof. Thus, it is possible to obtain a dust proofing effect of preventing the dust from intruding from the gap in the front face of the shutter 13.

Further, a bearing 22 for a support shaft 21 inserted into shaft holes 20 at the lower ends of the right and left side walls 1c and 1c in the front-end side of the adapter housing 1 (the front housing 1A) is integrally formed in both side at the rear of the lower end of the shutter 13.

Thus, the shutter 13 is axially supported to freely rotate via the support shaft 21 and is normally biased and retained in the closing direction by a leaf spring 23 which is arranged in the lower end of the shutter 13.

At this time, as already mentioned, the upper ends of the outer plates 14 of the shutters 13 are in a state of being respectively fitted to four locking concave portions 12 which are disposed at the rear end edge of the locking plate 9 of the upper guide 7.

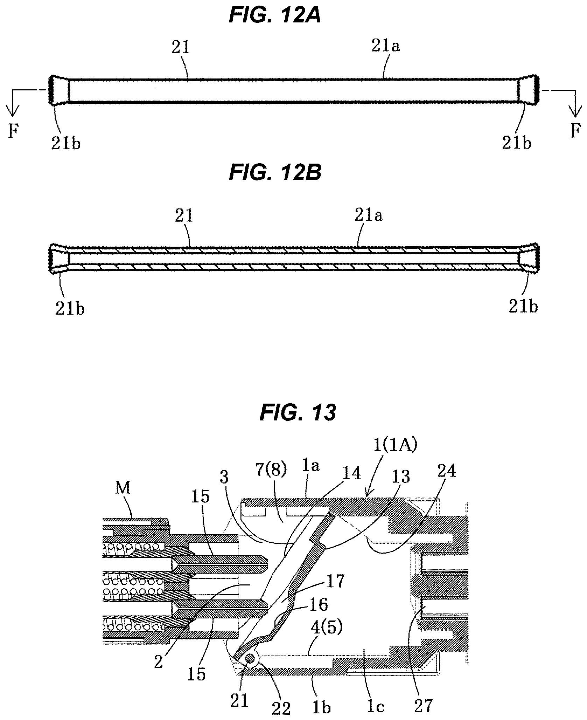

In the support shaft 21, as shown in Fig. 12, a slip-off preventing portion 21b having a trumpet shape is formed in both ends by caulking both ends of a circular pipe 21a. Thus, it is possible to effectively prevent the support shaft 21 from being disconnected from the shaft hole 20 of the adapter housing 1 (the front housing 1A).

The adapter housing 1 (the front housing 1A) is provided at the rear of the guide plate 8 of the upper guide 7 attached to the lower surface of the upper wall 1a thereof, with the same number of arcuate guides 24 as the guide plates 8 (four in the present embodiment) in a downward protruding manner in such a manner that the leading end of the shutter 13 comes into slidable contact when rotating in association with the closing or opening motion of the shutter 13 caused by insertion and extraction of the optical connector M, as shown in Figs. 4, 13, 17 and 18. Thus, the shutter 13 is opened and closed normally at an accurate position via the support shaft 21.

In the meantime, as shown in Figs. 1, 4, 5, 14, 15, 17 and 18, three ports 25 fitting to the other optical connector (not shown) are formed in the rear housing 1B of the adapter housing 1, and a sleeve holder 27 in which totally six sleeves 26 are housed vertically and horizontally over the front housing 1A is built in the rear housing 1B.

The embodiment mentioned above is formed as a three-parts type having three ports 3 and three shutters 13 for fitting three optical connectors M to the front end opening portion 2 of the adapter housing 1. However, it is possible to form as a two-parts type or a four or more-parts type.

### REFERENCE SIGNS LIST

M optical connector
1 adapter housing
1A front housing
1B rear housing
1a upper wall
1b bottom wall
1c side wall
2 front end opening portion
3 port
4 lower guide
5 guide projection
5a narrow guide projection
5b wide guide projection
6 protruding portion
7 upper guide
8 guide plate
8a guide plate
8b guide plate
8c guide plate
8d guide plate
9 locking plate
10 locking hole
10a locking pawl
11 long hole
11a locking pawl
12 locking concave portion
13 shutter
14 outer plate
14a notch
14b taper
15 ferrule
16 concave portion
17 side plate
18 shutter plate
19 notch groove
20 shaft hole
21 support shaft
21a circular pipe
21b slip-off preventing portion
22 bearing
23 leaf spring
24 arcuate guide
25 port
26 sleeve
27 sleeve holder

## Claims

1. A dust proofing adapter with shutter for optical connectors comprising a rectangular adapter housing which is formed by an upper wall, a bottom wall and right and left side walls in such a manner as to communicate in a front-back direction,
wherein a lower guide aligning and retaining a plurality of shutters is provided in a protruding manner on a bottom wall in a front-end opening portion of the adapter housing,
wherein an upper guide is provided in a protruding manner on a lower surface of an upper wall in the front-end opening portion of the adapter housing for forming the same number of ports as that of the plurality of optical connectors, the ports fitting upper portions of the optical connectors, and
wherein the same number of shutters closing the ports are arranged in parallel in close contact with each other so that upper portions are inclined rearward, for each of the ports in the front end opening portion of the adapter housing, the shutter is retained to be normally energized in a closing direction by a spring which is arranged in a lower end of each of the shutters, and an upper end of each of the shutters is locked to a rear end of an upper guide which is provided in a protruding manner on a lower surface of the upper wall of the adapter housing.

2. The dust proofing adapter with shutter for optical connector according to claim 1,
wherein in the adapter housing, arc-shaped protruding portions are formed in leading ends of right and left side walls so as to serve as an insertion guide by coming into slidable contact with outer surfaces of right and left side portions of the optical connectors fitting to inner portions of the ports positioned at both right and left ends.

3. The dust proofing adapter with shutter for optical connector according to claim 1,
wherein the lower guide is formed by disposing a plurality of guide projections in a protruding manner in a front-back direction at intervals on an upper surface in a bottom wall of the adapter housing so as to normally align and retain the plurality of shutters side by side, the guide projection having a square bar shape.

4. The dust proofing adapter with shutter for optical connector according to claim 1,
wherein the upper guide is formed by disposing a plurality of guide plates in a protruding manner at the same intervals as a lateral width of an upper portion of the optical connector fitted to each of the ports in a lower side of a locking plate attached to a lower surface of an upper wall of the adapter housing.

5. The dust proofing adapter with shutter for optical connector according to claim 4,
wherein a pair of two locking holes for attaching and detaching the upper guide are opened to both right and left sides in front of an upper wall of the adapter housing, and
wherein a locking pawl is formed below one side of right and left inner walls of each of the pair of two locking holes.

6. The dust proofing adapter with shutter for optical connector according to claim 4,
wherein the locking plate of the upper guide is formed into a rectangular shape in a plan view, a pair of two guide plates are perpendicularly fixed to lower sides of both ends thereof, and upper ends of the two guide plates are fixed to inner sides of both the guide plates so as to form totally three intervals having the same size as the lateral width of the upper portion of the optical connector on the lower surface of the locking plate.

7. The dust proofing adapter with shutter for optical connector according to claim 6,
wherein in the locking plate of the upper guide, a long hole is opened along a longitudinal direction at the center portion thereof, the locking pawls disposed in upper ends of two guide plates are inward inserted and fixed above an inner side of the long hole at the same intervals as the size of the lateral width of the upper portion of the optical connector, and the locking pawls are engaged with locking pawls disposed below the locking hole opened to the upper wall of the adapter housing, thereby forming the two guide plates in such a manner as to removably fix to a lower side of the locking plate.

8. The dust proofing adapter with shutter for optical connector according to claim 1,
wherein the locking plate of the upper guide forms in a rear end edge thereof locking concave portions to which upper portions of outer plates disposed in both sides of the shutter in a front side are fitted in a diagonally inclined manner to be retained.

9. The dust proofing adapter with shutter for optical connector according to claim 1, wherein
the shutter is provided below a center portion thereof with a concave portion having an U-shaped form in a side view, so as to prevent an optical ferrule protruding to each of the optical connector leading ends from being in contact, when the optical connector is erroneously fitted to each of the ports of the adapter housing from the above or below diagonally, and is provided with a shutter plate which integrally includes side plates for closing both right and left sides of the concave portion, the outer plates are integrally connected to both sides of the upper portions of the side plates in the shutter plate, and each of a pair of notch grooves is formed between an outer surface of the shutter plate and a rear end of the outer plate, the notch grooves detachably fitting to the lower guide of the adapter housing.

10. The dust proofing adapter with shutter for optical connector according to claim 9, wherein
the shutter forms arcuate notches in upper ends of the outer plates connected to both sides of the concave portion of the shutter plate, so as to prevent the optical ferrule protruding to each of the optical connector leading ends from being in contact when the optical connector is erroneously fitted to each of the ports of the adapter housing in an inclined manner from a rightward direction or a leftward direction.

11. The dust proofing adapter with shutter for optical connector according to claim 9, wherein
the shutter is formed in such a manner that an upper end of the outer plate protrudes with respect to an upper end of a side plate in the shutter plate, so that the outer plate leading ends are provided in a protruding manner in a pair vertically long state in both ends in a front face of the shutter closing the front end opening portion of the adapter housing.

12. The dust proofing adapter with shutter for optical connector according to claim 9, wherein
the shutter is formed as a taper in which outer surfaces of a pair of outer plates disposed in both sides of the shutter plate are expanded little by little toward a rear side.

13. The dust proofing adapter with shutter for optical connector according to claim 9, wherein
a notch groove of the shutter is formed in such a manner as to detachably fit to one surface portion above a square-bar-shaped guide projection constructing the lower guide provided in a protruding manner in a bottom wall of the adapter housing and allow a notch groove of the other shutter adjacent to the remaining one surface portion to detachably fit.

14. The dust proofing adapter with shutter for optical connector according to claim 9, wherein
a bearing for a support shaft inserted into shaft holes in lower ends of the right and left side walls in a front-end side of the adapter housing is integrally formed in a rear side of a lower end of the shutter.

15. The dust proofing adapter with shutter for optical connector according to claim 14, wherein the support shaft axially supported to the bearing forms a trumpet-shaped slip-off preventing portion in both ends of a circular pipe.
